# EUROPEAN PATENT APPLICATION

(11) **EP 2 172 425 A1**
(43) Date of publication of application: **07.04.2010**
(21) Application number: 08777207.5
(22) Date of filing: 13.06.2008
(51) Int. Cl.: C01B 33/44, C08K 9/04, C08L 101/00

(54) **ORGANIZED CLAY, PROCESS FOR PRODUCING THE SAME, AND RESIN COMPOSITE CONTAINING ORGANIZED CLAY**

(30) Priority: 20.06.2007 JP 2007162926
(71) Applicant: Showa Denko K.K., Tokyo 105-8518 (JP)
(72) Inventor: KUMAKI, Terutoshi, Kawasaki-shi Kanagawa 210-0858 (JP)
(74) Representative: Strehl Schübel-Hopf & Partner
(86) International application number: PCT/JP2008/060846
(87) International publication number: WO 2008/156032

(57) **Abstract**

The present invention relates to:
a process for producing an organized clay which comprises: a step in which a lamellar clay mineral having a number-average particle diameter of 10-300 nm (layered silicate such as smectite, talc, kaolinite, or mica) is swollen with water or an aqueous solvent and hydroxy groups located on the edges of the swollen lamellar clay mineral are organized with a coupling agent, etc.; and a step in which an organic onium salt is then added to the lamellar clay mineral to conduct cation exchange in which metal cations present between the layers of the lamellar clay mineral are replaced with organic-onium ions in an amount corresponding to 60-120% of methylene blue (MB) adsorption equivalent;
an organized clay which is obtained by the process and can be uniformly dispersed in a liquid resin while retaining substantially no layered structure; a resin composite (varnish, printing ink, coating material, etc.) comprising a liquid resin composition and the organized clay uniformly dispersed therein; and
a cured object obtained from the resin composite.

## Description

### TECHNICAL FIELD

The present invention relates to an organized clay, the method for producing the same, and a resin composite containing the organized clay. Specifically, the present invention relates to an organized clay obtained by organizing hydroxy groups located on the edges of the organized clay and conducting cation exchange in which metal cations present between the layers of the clay mineral are replaced with organic-onium salt, the method for producing the same, and a resin composite in which the organized lay is uniformly dispersed without retaining a lamellar structure substantially.

### BACKGROUND ART

The lamellar clay mineral represented by phyllosilicate is used as a viscosity modifier for fluid fine-chemical products such as a paint, printing ink and cosmetics because the mineral has a function to be dispersed into a various compounds serving as a matrix to thereby adjust or improve their rheological property. Also, phyllosilicate is used as a filler or a reinforcer for the purpose of improving physical properties such as toughness, mechanical properties and heat distortion resistance of a polymer material such as rubber and plastics.

With respect to dispersibility, it has been tried to improve the dispersibility of the clay mineral into various organic solvents by selecting the type of the organic onium salt to be intercalated between the layers of the lamellar clay minerals (see JP-A-H05-163014 publication; Patent Document 1 and JP-A-H07-187656; Patent Document 2). However, though the organized clay obtained by cation exchange using an organic onium salt can achieve a satisfactory dispersibility in a low-viscosity organic solvent, the clay does not exhibit sufficient dispersibility in a high-viscosity liquid resin, and further development of dispersibility has been demanded.

Also, a method for organizing a lamellar clay mineral with a silane coupling agent and intercalating a specific organic compound between the layers of the mineral has been proposed (see JP-A-H09-227778; Patent Document 3 and JP-A-H10-259017; Patent Document 4). However, the method wherein the mineral is organized by cation exchange with an organic-onium salt so as to facilitate the dispersion by increasing the space between the layers of the mineral or the method wherein a specific organic compound is intercalated between the layers after organizing the mineral with a silane coupling agent has a problem raising concern that the intercalated compound may adversely affect the physical properties of the matrix in which the organized clay is dispersed.

Patent Document 1: JP-A-H5-163014
Patent Document 2: JP-A-H7-187656
Patent Document 3: JP-A-H9-227778
Patent Document 4: JP-A-H10-259017

### DISCLOSURE OF INVENTION

### Problems to be Solved by the Invention

An objective of the present invention is to provide an organic clay which exhibits sufficient dispersibility even in a high-viscosity liquid resin and the compound intercalated between the layers of the clay mineral will not adversely affect the physical properties of the matrix in which the mineral clay is dispersed.
An objective of the present invention is to provide an organized clay which can be uniformly dispersed in liquid resin while retaining substantially no layered structure, the method for producing the clay, and a resin composite comprising the organized clay uniformly dispersed therein.

### Means to Solve the Problem

As a result of intensive studies on the above problem, the present inventors have found that by organizing a lamellar clay mineral through a specific modification method, an organized clay which enables uniform dispersion superior to a conventional product and a resin composite comprising the organized clay uniformly dispersed therein can be obtained and accomplished the present invention.

That is, the present invention encompasses the embodiments shown in the following 1 to 15:
1. The method for producing an organized clay comprising:
   (1) a step of swelling a lamellar clay mineral having a number-average particle diameter of 10 to 300 nm with water or an aqueous solvent and organizing hydroxy groups located on the edges of the swollen lamellar clay mineral, followed by
   (2) a step of adding an organic onium salt to the lamellar clay mineral to thereby conduct cation exchange in which metal cations present between the layers of the lamellar clay mineral are replaced with organic onium ions in an amount corresponding to 60 to 120 % of methylene blue (MB) adsorption equivalent.
2. The method for producing the organized clay as described in 1 above, wherein the organic modification of the hydroxy groups located on the edges of the swollen mineral is conducted by the treatment with a coupling agent.
3. The method for producing the organized clay as described in 2 above, wherein the treatment with a coupling agent is a treatment with a silane coupling agent, and the silane coupling agent used in the treatment by the silane coupling agent is 1 to 150 part(s) by mass to 100 parts by mass of the lamellar clay mineral.
4. The method for producing the organized clay as described in any one of 1 to 3 above, wherein the lamellar clay mineral is layered silicate.
5. The method for producing the organized clay as described in 4 above, wherein the layered silicate is at least one member selected from a group consisting of smectite, talc, kaolinite and mica.
6. An organized clay produced by the production method described in any one of 1 to 5 above.
7. An organized clay in which the edges of the lamellar clay mineral having an average-number particle diameter of 10 to 300 nm are organically modified and an organic onium ions are present between the layers of the lamellar clay mineral.
8. The organized clay as described in 7 above, wherein the lamellar clay mineral is layered silicate.
9. The organized clay as described in 8 above, wherein the layered silicate is at least one member selected from a group consisting of smectite, talk, kaolinite and mica.
10. A resin composite comprises the organized clay described in any one of 6 to 9 above.
11. The fluid resin composite as described in 10 above, wherein the resin in the resin composite is a fluid resin composition and the organized clay is uniformly dispersed in the resin composition while retaining substantially no layered structure.
12. The fluid resin composite as described in 11 above, which is a paint, print ink or a coating material.
13. The transparent resin composite as described in 10 above, wherein the resin in the resin composite is a fluid resin composition and the organized clay is uniformly dispersed in the resin composition while retaining substantially no layered structure.
14. A transparent resin molded product of the cured transparent resin composite described in 13 above.
15. The transparent resin molded product as described in 14 above, which is a transparent rubber or a transparent plastic.

### EFFECTS OF THE INVENTION

The present invention makes it possible to provide an organized clay which exhibits sufficient dispersibility even in high-viscosity liquid resin and the compound intercalated between the layers of the clay mineral will not adversely affect the physical properties of the matrix in which the mineral clay is dispersed.
The present invention makes it possible to provide an organized clay which can be uniformly dispersed in liquid resin while retaining substantially no layered structure, the method for producing the clay, and a resin composite comprising the organized clay uniformly dispersed therein.

The fluid resin composite obtained by the method of the present invention, which comprised an organized clay uniformly dispersed in the liquid resin while retaining substantially no layered structure, is excellent in dispersibility and transparency; can be effectively used for paint, print ink, coating materials and the like; and the cured product of the composite can provide a transparent resin molded body, which is particularly excellent in terms of mechanical properties and transparency of a polymer material such as transparent rubber and transparent plastics.

### BEST MODE FOR CARRYING OUT THE INVENTION

Hereinafter, the present invention is described in details.
In the present invention, an organized clay is obtained first by:
(1) a step of swelling a lamellar clay mineral having a number-average particle diameter of 10 to 300 nm with water or an aqueous solvent and organizing hydroxy groups located on the edges of the swollen lamellar clay mineral, and next by:
(2) a step of adding an organic onium salt to the lamellar clay mineral to thereby conduct cation exchange in which metal cations present between the layers of the lamellar clay mineral are replaced with organic onium ions in an amount corresponding to 60 to 120 % of methylene blue (MB) adsorption equivalent. That is, first, (1) the lamellar clay mineral is swollen with water or an aqueous solvent (preferably a mixture of water and alcohol) and the hydroxy groups located on the edges of the lamellar clay mineral are organically modified. Next, the step of cation exchange in (2) is conducted. In the present invention, an organized clay is obtained by the organic treatment in step (1) and the addition of an organic onium salt to thereby conduct cation exchange in step (2).

Also, in the present invention, a resin composite can be obtained by uniformly dispersing the organized clay in resin. Examples of a fluid resin composite include paint, print ink and coating materials. While paint forms a general protective coating layer, a decorative film and the like, a coating material forms a functional film such as a hard coating, an antistatic coating, an antireflection (AR) coating and a moistureproof coating. Also, the resin composite can be cured to obtain a resin molded product. Examples of a transparent resin molded product include a transparent cured product of a known thermosetting resin composition and a photocurable resin composition described below including transparent rubber such as polyurethane or transparent plastic such as polyallyl ester, polycarbonate, acrylic polymer and polystyrene.

### [Number-average particle size of the lamellar clay mineral]

In order to make the resin composition in which organized clay is dispersed be a transparent one according to the present invention, the number-average particle size of the lamellar clay mineral as a material needs to be smaller enough than wavelength of visible light. The term "visible light" used herein means light with a wavelength of 400 to 800 nm. Therefore, it is preferable that the number-average particle size of the lamellar clay mineral be within a range of 10 to 300 nm, more preferably 30 to 200 nm. If the number-average particle size is less than 10 nm, satisfactory transparency can be achieved but mechanical properties such as the linear expansion coefficient, the improvement of which is another objective of adding the lamellar clay mineral, do not become small enough. If the size exceeds 300 nm, particles having sizes overlapping with visible light wavelength and therefore, it is disadvantageous in light of transparency.

The term "number-average particle size of the lamellar clay mineral" means a number-average particle size measured by dynamic light scattering method while dispersing the mineral in solvent.

A number-average particle size measured by dynamic light scattering method referred to, for example, pages 169 to 179 in "Measurements Techniques of Particle Diameter" (edited by The Society of Powder Technology, Japan: 1994). Examples of measurement apparatus used here include Dynamic Light Scattering Nano-Particle Size Analyzer LB-550 (manufactured by HORIBA, Ltd.). The number-average particle size of the lamellar clay mineral measured by the dynamic light scattering method can be considered to be substantially the same as number-average particle size of the lamellar clay mineral after dispersed in the resin layer in the present invention.

### [Lamellar clay mineral]

The lamellar clay mineral used in the present invention is layered silicate having a lamellar structure consisting of unit crystal layers stacked one on another. A clay mineral showing a property of taking up water between the layers and being swollen in water or an aqueous solvent is preferably used. Preferred examples of such a lamellar clay mineral include smectites such as montmorillonite, hectorite, stevensite, saponite and beidellite and kaolinite, dickite, nacrite, halloysite, antigorite, chrysotile, pyrophylite, tetrasililic mica, sodium tainiolite, white mica, margarite, talc, vermiculite, phlogopite, xanthophyllite and chlorite. More preferred among these is at least one member selected from the group consisting of smectite, talc, kaolinite and mica in terms of dispersibility and size. Particularly, smectite is preferable in terms of the swelling property and size.

In the method for producing an organized clay of the present invention, after conducting step (1) in which a lamellar clay mineral is swollen in water or an aqueous solvent (preferably a mixture of water and alcohol such as methanol, ethanol, 1-propanol and 2-propanol (hereinafter may be abbreviated as "water/alcohol") in advance and hydroxy groups located on the edges of the lamellar clay mineral are organically modified, step (2) of treating it with an organic onium salt is performed.

In the case where the lamellar clay mineral is subjected to organic modification in step (1) without being swollen in advance, or where the organic modification in step (1) and the cation exchange in step (2) are performed in a different order, the obtained organized clay does not exhibit a desired dispersibility.

In the organic modification of hydroxyl groups located on the edges of the clay mineral, a method of treating hydroxyl groups with a coupling agent such as a silane coupling agent and a titanium coupling agent having an organic group can be used and preferred is method with a silane coupling agent. As a silane coupling agent, a generally-used surface treatment agent can be used.

The above-mentioned silane coupling agent is preferably a silane coupling agent represented by formula (I).
In the formula, n is 0 or an integer of 1 to 3 and Y is at least one member selected from a group consisting of a hydrocarbon group having carbon number of 1 to 25 and an organic functional group comprising a hydrocarbon group having carbon number of 1 to 25 and a substituent. Specific examples of such a substituent is a functional group selected from a group consisting of an ester group, ether group, epoxy group, amino group, carboxyl group, carbonyl group, amide group, mercapto group, sulfonyl group, sulfinyl group, nitro group, nitroso group, nitrile group, halogen atom and hydroxy group. X is a hydrolyzable group and/or a hydroxy group, and the hydrolyzable group is at least one member selected from alkoxy group, alkenyloxy group, ketoxime group, acyloxy group, amino group, aminoxy group, amide group and halogen. When n Y's and 4-n X's are more than one respectively, all of Y's may be the same or different to each other and the same applies to X's.

The hydrocarbon group indicates a monovalent or polyvalent saturated or unsaturated aliphatic hydrocarbon group having a linear or branched chain (i.e. having a side chain), aromatic hydrocarbon group and alicyclic hydrocarbon group, and examples include an alkyl group, alkenyl group, alkynyl group, phenyl group, naphthyl group and cycloalkyl group. In the present specification, alkyl group encompasses a polyvalent hydrocarbon group such as alkylene group unless otherwise stated. Similarly, alkenyl group, alkynyl group, phenyl group, naphthyl group and cycloalkyl group respectively encompass alkenylene group, alkynilene group, phenylene group, naphthylene group and cycloalkylene group and the like.

In formula (I), examples of a silane coupling agent in which Y is a hydrocarbon group having 1 to 25 carbon atoms include one having a polymethylene chain such as octyltriethoxysilane, one having lower alkyl group such as methyltriethoxysilane, one having an unsaturated hydrocarbon group such as 2-hexenyltrimethoxysilane, one having a side chain such as 2-ethylhexyltrimethoxysilane, one having a phenyl group such as phenyltriethoxysilane, one having a naphthyl group such as 3-β-naphthylpropyltrimethoxysilane and one having a phenylene group such as p-vinylbenzyltrimethoxysilane. Examples of a silane coupling agent in which Y is a group having a vinyl group include vinyltrimethoxysilane, vinyltrichlorosilane and vinyltriacetoxysilane. Examples of a silane coupling agent in which Y is a group having an ester group include γ-methacryloxypropyltriethoxysilane. Examples of a silane coupling agent in which Y is a group having an ether group include γ-polyoxyethylenepropyltrimethoxysilane and 2-ethoxyethyltrimethoxysilane. Examples of a silane coupling agent in which Y is a group having an epoxy group include γ-glycidoxypropyltrimethoxysilane. Examples of a silane coupling agent in which Y is a group having an amino group include γ-aminopropyltrimethoxysilane, γ-(2-aminoethyl)aminopropyltrimethoxysilane and γ-anilinopropyltrimethoxysilane. Examples of a silane coupling agent in which Y is a group having a carboxyl group include γ-(4-carboxyphenyl)propyltrimethoxysilane. Examples of a silane coupling agent in which Y is a group having a carbonyl group include ureidopropyltriethoxysilane. Examples of a silane coupling agent in which Y is a group having a mercapto group include γ-mercaptopropyltrimethoxysilane. Examples of a silane coupling agent in which Y is a group having a halogen atom include γ-chloropropyltriethoxysilane. Examples of a silane coupling agent in which Y is a group having a sulfonyl group include γ-phenylsulfonylpropyltrimethoxysilane. Examples of a silane coupling agent in which Y is a group having a sulfinyl group include γ-phenylsulfinylpropyltrimethoxysilane. Examples of a silane coupling agent in which Y is a group having a nitro group include γ-nitropropyltriethoxysilane. Examples of a silane coupling agent in which Y is a group having a nitroso group include γ-nitrosopropyltriethoxysilane. Examples of a silane coupling agent in which Y is a group having a nitrile group include γ-cyanoethyltriethoxysilane and γ-cyanopropyltriethoxysilane. Examples of a silane coupling agent in which is Y is a group having a hydroxyl group include N,N-di(2-hydroxyethyl)amino-3-propyltriethoxysilane. The hydroxy group may be in a form of a silanol group (SiOH).

A substitution product or derivative of the above-mentioned silane coupling agent can also be used. These silane coupling agents can be used as a single agent or in combination.
Among the above-mentioned silane coupling agents, preferred are octyltriethoxysilane, vinyltriethoxysilane and γ-methacryloxypropyltriethoxysilane as a single agent or in combination.

The amount of the silane coupling agent required for organic modification of the groups located on the edges of the lamellar mineral clay is 1 to 150 parts by mass, preferably 5 to 100 parts by mass, more preferably 10 to 60 parts by mass to 100 parts by mass of the lamellar mineral clay. If the amount is less than 1 part by mass or exceeds 150 parts by mass, a desired dispersibility cannot be achieved.

In the present invention, the organization method is not particularly limited. However, when the organization is performed with a silane coupling agent, the organization is performed by swelling the lamellar clay mineral with water or an aqueous solvent such as water/alcohol in advance and adding a silane coupling agent to the liquid containing the clay mineral. The concentration of the lamellar clay mineral is not particularly limited as long as the mineral can be uniformly mixed. Preferably, the lamellar clay mineral is about 1 to 5 mass% of the total mass of the lamellar clay mineral and a dispersion medium, which is preferably water or an aqueous solvent (preferably water/alcohol). The method of adding the coupling agent is not particularly limited either, and a desired amount may be added all at once in the beginning, in several parts or continuously. The coupling agent may be diluted with alcohol for being added.

As an onium salt to be used for the cation exchange in the present invention, commonly-known cationic surfactant can be used and examples include quaternary ammonium salt and quaternary phosphonium salt. Among them, it is preferable to use alkyl ammonium ion salt having 6 or more carbon atoms, aromatic quaternary ammonium ion salt or heterocyclic quaternary ammonium ion salt.

There is no limitation on the quaternary ammonium salt. Examples thereof include trimethyl alkyl ammonium salt, triethyl alkyl ammonium salt, tributylalkyl ammonium salt, dimethyl dialkyl ammonium salt, dibutyl dialkyl ammonium salt, methylbenzyl dialkyl ammonium salt, dibenzyl dialkyl ammonium salt, trialkyl methyl ammonium salt, trialkyl ethyl ammonium salt, trialkyl butyl ammonium salt; quaternary ammonium salts having an aromatic ring such as benzylmethyl{2-[2-(p-1,1,3,3-tetramethylbutylphenoxy)ethoxy]ethyl}ammonium chloride; quaternary ammonium salts derived from aromatic amine such as trimethylphenyl ammonium; quaternary ammonium salts having a heterocyclic ring such as alkyl pyridinium salt and imidazolium salt; dialkyl quaternary ammonium salt having two polyethylene glycol chains, dialkyl quaternary ammonium salt having two polypropylene glycol chains, trialkyl quaternary ammonium salt having one polyethylene glycol chain, and trialkyl quaternary ammonium salt having one polypropylene glycol chain. Among them, lauryl trimethyl ammonium salt, stearyl trimethyl ammonium salt, trioctyl methyl ammonium salt, dimethyl dioctadecyl ammonium salt, dihydrogenated beef tallow dimethyl ammonium salt, distearyl dibenzyl ammonium salt and N-polyoxyethylene-N-lauryl-N,N-dimethyl ammonium salt are preferred. One of these quaternary ammonium salts may be used singly or two or more of them may be used in combination.

Among the above-mentioned ammonium salts, it is preferable to use trioctyl methylammonium salt and dimethyl dioctadecyl ammonium salt.

There is no limitation on the quaternary phosphonium salt. Examples thereof include dodecyl triphenylphosphonium salt, methyl triphenyl phosphonium salt, lauryl trimethyl phosphonium salt, stearyl trimethyl phosphonium salt, trioctyl methyl phosphonium salt, tributyl dodecyl phosphonium salt, stearyl tributyl phosphonium salt, trioctyl methyl phosphonium salt, distearyl dimethyl phosphonium salt and distearyl dibenzyl phosphonium salt. Among these, it is preferable to use tributyl dodecyl phosphonium salt or stearyl tributyl phosphonium salt. One of these quaternary phosphonium salts may be used singly or two or more of them may be used in combination.

The cation exchange capacity of the lamellar clay mineral using an onium salt in the present invention is preferably 60 to 120%, more preferably 75 to 100% of methylene blue (MB) adsorption equivalent which corresponds to equivalent weight of ion-exchange. If the cation exchange capacity is less than 60% of MB adsorption equivalent, a desired dispersibility cannot be achieved. If the cation exchange capacity exceeds 120%, the onium salt in excess will affect adversely the properties of the matrix after the onium salt is added.

The cation exchange using an onium salt in the present invention is performed by adding an onium salt to the liquid in which organic modification of the hydroxy groups located on the edges of the swollen lamellar clay mineral was conducted. There is no particular limitation on the cation exchange method but it is preferable to conduct it by adding a solution in which an onium salt is dissolved to water or an aqueous solution (preferably water/alcohol) all at once or in several parts.

There is no particular limitation on the liquid resin composition used in the present invention as long as its cured product can be transparent, and known thermosetting resin composition and photocurable resin composition may be used.

Specifically, the composition is a radically-curable liquid resin composition comprising allyl ester resin, vinyl ester resin, cross-linkable acrylic resin, epoxy resin, thermosetting modified polyphenylene ether resin, thermosetting polyimide resin, silicone resin, benzoxadine resin, melamine resin, urea resin, phenol resin, bismaleimide-triazine resin, alkyd resin, furan resin, polyurethane resin, aniline resin and the like and a radical curing agent, a reactive diluent (reactive monomer) and various additives as needed. Among these resin compositions, preferred are an allyl ester resin composition and a vinyl ester resin composition. These curable resin compositions may be used singly or two or more of them may be used in combination.

In the present invention, the dispersion of the organized clay into a liquid resin composition can be accomplished by a known dispersing method using a mixer such as a three-roll mixer and homogenizer.

### EXAMPLES

Hereinafter, the present invention will be explained in more detail below with reference to Examples and Comparative Examples, but the present invention is not limited thereto.
Methods for evaluating dispersibility of the organized clay obtained in Examples and Comparative Examples are described below.

### [Existence or nonexistence of a layered structure]

With regard to the dispersion of an organized clay in resin, "retaining substantially no layered structure" means no peak indicating the distance between the layers of the lamellar clay mineral is observed in the measurement of a molded product of the resin wherein the organized clay is dispersed by X-ray diffraction (XRD) in low angle region (2θ: 2 to 10°).
XRD measurement was performed using diffractometer RU-200B produced by Rigaku Corporation and a target generating Cu-Kα radiation generated at 50 kV and 180 mA at a diffraction angle 2θ of 2 to 20° and a stepping interval of 0.2°.

### [Transparency]

Transparency of the resin composite is evaluated using the light transmittance measured at 600 nm using spectrophotometer V-570 produced by JASCO Corporation. The transparent resin composite of the present invention has light transmittance of 85 % or more.

### Example 1:

40 g of smectite (single wall nanotube (SWN); produced by Co-op Chemical Co., Ltd.; MB adsorption equivalent of 101 meq/100g) was added to 2 liter of pure water and the mixture was stirred at 60 °C for two hours to sufficiently swell the smectite. Thereto were added 12.8 g of octyltriethoxysilane (OTS) (Z-6341 produced by Dow Corning Toray Co., Ltd.) and 3.2 g of vinyltriethoxysilane (VTS) (LS-2300 produced by Shin-Etsu Chemical Co., Ltd.) (total amount of the silane coupling agent is 4/10 of that of smectite) and the mixture was stirred for another six hours to organize hydroxy groups located on the edges of the smectite. Subsequently, after adding 18.1 g (corresponding to 100% of MB adsorption equivalent) of tributyldodecyl phosphonium bromide (TBDDP) (produced by TOKYO CHEMICAL INDUSTRY Co., Ltd.) dissolved in 200 ml of mixed solution of water/ethanol (1:1 by volume), the mixture was stirred for one hour to conduct cation exchange. The reaction product was subjected to solid-liquid separation, washed to remove by-product salts and then dried to obtain an organized clay.

### Example 2:

An organized clay was obtained in the same way as in Example 1 except that 23.5 g of dimethyldioctadecylammonium salt (DMDODA; produced by Wako Pure Chemical Industries, Ltd.) (corresponding to 100% of MB adsorption equivalent) was used in place of the onium salt used for cation exchange.

### Example 3:

An organized clay was obtained in the same way as in Example 1 except that 16.1 g of trioctylmethylammonium salt (TOMA; produced by TOKYO CHEMICAL INDUSTRY Co., Ltd.) (corresponding to 100% of MB adsorption equivalent) was used in place of the onium salt used for cation exchange.

### Example 4:

An organized clay was obtained in the same way as in Example 1 except that 12.1 g of trioctylmethylammonium salt (TOMA) (corresponding to 75% of MB adsorption equivalent) was used in place of the onium salt used for cation exchange.

### Example 5:

An organized clay was obtained in the same way as in Example 3 except that silane coupling agents were changed to 3.2 g of octyltriethoxysilane (OTS) and 0.8 g of vinyltriethoxysilane (VTS) (total amount of the silane coupling agent is 1/10 of that of smectite).

### Example 6:

An organized clay was obtained in the same way as in Example 3 except that silane coupling agents were changed to 32.0 g of octyltriethoxysilane (OTS) and 8.0 g of vinyltriethoxysilane (VTS) (total amount of the silane coupling agent is equal to that of smectite).

### Example 7:

An organized clay was obtained in the same way as in Example 3 except that silane coupling agents were changed to 11.6 g of γ-methacryloxypropyltriethoxysilane (γ-MPS) (KBE-503 produced by Shin-Etsu Chemical Co., Ltd.) (to 40 g of smectite).

### Comparative Example 1:

An organized clay was obtained in the same way as in Example 3 except that the operation for organizing hydroxy groups located on the edges of smectite with a silane coupling agent was not conducted.

### Comparative Example 2:

An organized clay was obtained in the same way as in Example 6 except that the operation of cation exchange was not conducted.

### Comparative Example 3:

An organized clay was obtained in the same way as in Example 1 except that 8.1 g of trioctylmethylammonium salt (TOMA) (corresponding to 50% of MB adsorption equivalent) was used in place of the onium salt used for cation exchange.

### Comparative Example 4:

An organized clay was obtained in the same way as in Example 3 except that silane coupling agents were changed to 64.0 g of octyltriethoxysilane (OTS) and 16.0 g of vinyltriethoxysilane (VTS) (total amount of the silane coupling agent is two times that of smectite).

### Comparative Example 5:

An organized clay was obtained in the same way as in Example 6 except for reversing the order of organizing hydroxy groups located on the edges of smectite with a silane coupling agent and conducting cation exchange with an onium salt.

Each of the organized clay obtained in Examples 1 to 6 and Comparative Examples 1 to 5 and allylester resin (DA101 : 1,4-cyclohexanedicarboxylic acid diallyl= 1:1; produced by SHOWA DENKO K.K.) were blended in the proportion of 5:95 and PERHEXA TMH (produced by NOF Corporation) was added thereto as a radical initiator in an amount of 4 mass% to 100 mass% of the resin to obtain a resin composition. The resin composition was mixed using a homogenizer; after deaeration poured between two glass plates sandwiching a spacer 1 millimeters thick; and cured in a temperature profile of heating to 80°C for 0.5 hour, 110°C for one hour and 140°C for one hour.

The obtained resin plates were subjected to XRD measurement and evaluation for optical properties. The samples which experienced separation/segmentation of the organized clay during the partial curing were regarded as defective and did not undergo evaluation of properties. The evaluation results are shown in Table 1.

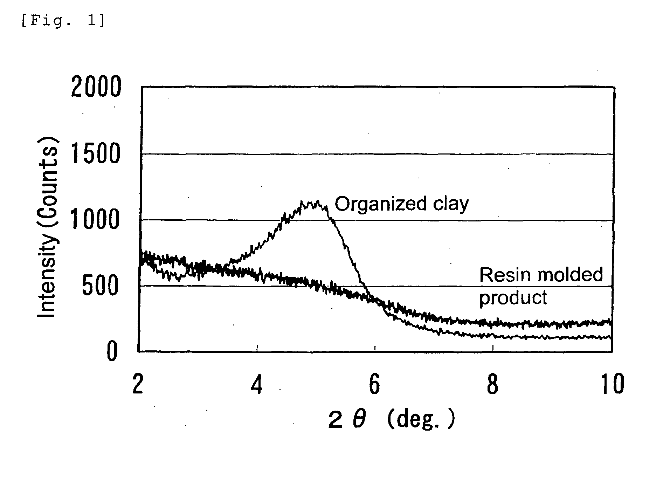

As a representative example, the results of XRD measurements of the organized clay of Example 1 and the resin molded product using the clay are shown in Fig. 1. The results show that a peak indicating the distance between the layers of the lamellar clay mineral observed in the organized clay disappears when the resin is blended and that the organized clay is dispersed to a level such that it retains substantially no layered structure.

[Table 1]

**Table 1**

| | Silane coupling agent for organizing hydroxy groups located on the edge | | Organic onium salt | | XRD peak | Light transmittance (%) |
|---|---|---|---|---|---|---|
| | Type | Amount (parts by mass) | Type | Amount (%) | | |
| Example 1 | OTS/VTS | 40 | TBDDP | 100 | Not present | 88.5 |
| Example 2 | OTS/VTS | 40 | DMDODA | 100 | Not present | 90.5 |
| Example 3 | OTS/VTS | 40 | TOMA | 100 | Not present | 89.3 |
| Example 4 | OTS/VTS | 40 | TOMA | 75 | Not present | 87.8 |
| Example 5 | OTS/VTS | 10 | TOMA | 100 | Not present | 88.3 |
| Example 6 | OTS/VTS | 100 | TOMA | 100 | Not present | 91.2 |
| Example 7 | γ-MPS | 40 | TOMA | 100 | Not present | 89.5 |
| Comparative Example1 | - | - | TOMA | 100 | Present | 89.8 |
| Comparative Example 2 | OTS/VTS | 100 | - | - | (Note) | |
| Comparative Example 3 | OTS/VTS | 100 | TOMA | 50 | Present | 83.5 |
| Comparative Example 4 | OTS/VTS | 200 | TOMA | 100 | (Note) | |
| Comparative Example 5 | OTS/VTS | 100 | TOMA | 100 | (Note) | |
| | Treatment of the hydroxy groups located on the edges is conducted after cation exchange | | | | | |

| | | | | | | |
|---|---|---|---|---|---|---|
| (Note): Separation/segmentation of the organized clay was observed at the time of producing a molded product. | | | | | | |

### BRIEF DESCRIPTION OF DRAWINGS

Fig. 1 shows the results of XRD measurement of the organized clay of Example 1 and a resin molded product using the clay.

## Claims

1. The method for producing an organized clay comprising:
(1) a step of swelling a lamellar clay mineral having a number-average particle diameter of 10 to 300 nm with water or an aqueous solvent and organizing hydroxy groups located on the edges of the swollen lamellar clay mineral, followed by
(2) a step of adding an organic onium salt to the lamellar clay mineral to thereby conduct cation exchange in which metal cations present between the layers of the lamellar clay mineral are replaced with organic onium ions in an amount corresponding to 60 to 120 % of methylene blue (MB) adsorption equivalent.

2. The method for producing the organized clay as claimed in claim 1, wherein the organic modification of the hydroxy groups located on the edges of the swollen mineral is conducted by the treatment with a coupling agent.

3. The method for producing the organized clay as claimed in claim 2, wherein the treatment with a coupling agent is a treatment with a silane coupling agent, and the silane coupling agent used in the treatment by the silane coupling agent is 1 to 150 part(s) by mass to 100 parts by mass of the lamellar clay mineral.

4. The method for producing the organized clay as claimed in any one of claims 1 to 3, wherein the lamellar clay mineral is layered silicate.

5. The method for producing the organized clay as claimed in claim 4, wherein the layered silicate is at least one member selected from a group consisting of smectite, talc, kaolinite and mica.

6. An organized clay produced by the production method claimed in any one of claims 1 to 5.

7. An organized clay in which the edges of the lamellar clay mineral having an average-number particle diameter of 10 to 300 nm are organically modified and an organic onium ions are present between the layers of the lamellar clay mineral.

8. The organized clay as claimed in claim 7, wherein the lamellar clay mineral is layered silicate.

9. The organized clay as claimed in claim 8, wherein the layered silicate is at least one member selected from a group consisting of smectite, talk, kaolinite and mica.

10. A resin composite comprises the organized clay claimed in any one of claims 6 to 9.

11. The fluid resin composite as claimed in claim 10, wherein the resin in the resin composite is a fluid resin composition and the organized clay is uniformly dispersed in the resin composition while retaining substantially no layered structure.

12. The fluid resin composite as claimed in claim 11, which is a paint, print ink or a coating material.

13. The transparent resin composite as claimed in claim 10, wherein the resin in the resin composite is a fluid resin composition and the organized clay is uniformly dispersed in the resin composition while retaining substantially no layered structure.

14. A transparent resin molded product of the cured transparent resin composite claimed in claim 13.

15. The transparent resin molded product as claimed in claim 14, which is a transparent rubber or a transparent plastic.
